# EUROPEAN PATENT APPLICATION

(11) **EP 4 588 762 A1**
(43) Date of publication of application: **23.07.2025**
(21) Application number: 22959935.2
(22) Date of filing: 28.09.2022
(51) Int. Cl.: B62D 21/17, B62D 21/15, B62D 21/02, B60K 1/04

(54) **CHASSIS AND VEHICLE**

(71) Applicant: Shenzhen Yinwang Intelligent Technologies Co., Ltd., Shenzhen, Guangdong 518129 (CN)
(72) Inventor: CHEN, Wei, Shenzhen, Guangdong 518129 (CN); REN, Muhan, Shenzhen, Guangdong 518129 (CN)
(74) Representative: Körber, Martin Hans
(86) International application number: PCT/CN2022/122186
(87) International publication number: WO 2024/065290

(57) **Abstract**

A chassis and a vehicle that are related to the field of vehicle technologies are provided, to resolve a problem of an inappropriate arrangement of functional pipes. The chassis includes a main vehicle frame, a cell assembly, and a plurality of functional pipes. The main vehicle frame includes a first longitudinal beam (1) and a second longitudinal beam (2). A middle section of the first longitudinal beam (1) forms a first battery outer side beam (11), and a middle section of the second longitudinal beam (2) forms a second battery outer side beam (21). The cell assembly is disposed between the first battery outer side beam (11) and the second battery outer side beam (21), and at least a part of the functional pipes run through the first battery outer side beam (11). In the chassis, occupation of arrangement space of the cell assembly by the functional pipes can be reduced, to improve battery packing efficiency and effectively improve a battery level and energy density. Thermal impact of the functional pipes on performance of cells can also be reduced. In addition, the functional pipes are physically protected against collision with other structures in the chassis.

## Description

### TECHNICAL FIELD

This application relates to the field of vehicle technologies, and in particular, to a chassis and a vehicle.

### BACKGROUND

Currently, a mainstream pure electric vehicle in the market is provided with an independent battery pack. If functional pipes such as a vehicle brake pipe, an air spring gas pipe, a cooling water pipe, and a rear air conditioner refrigerant pipe need to extend from a front part of the vehicle to a rear part of the vehicle, the functional pipes need to run through a region near the battery pack. The functional pipes usually run through a gap between an outer side beam independent of the battery pack and a longitudinal beam in a middle section of a main vehicle frame (or referred to as a vehicle body threshold beam).

A cell to chassis (Cell to Chassis, CTC) technology is a new technology for integration of a power battery system. A cell is directly integrated into a chassis. A CTC battery outer side beam is integrated with the longitudinal beam in the middle section of the main vehicle frame (or the vehicle body threshold beam) of the chassis. There is no appropriate solution for arranging the foregoing functional pipes from front to rear. Therefore, requirements such as anti-collision protection and battery space saving cannot be met.

In other conventional fuel vehicles and electric vehicles using a non-CTC technology, there is also a problem of an inappropriate arrangement of functional pipes, and consequently, collision with the functional pipes and occupation of entire vehicle space are likely to be caused.

### SUMMARY

This application provides a chassis and a vehicle, to provide appropriate arrangement space for functional pipes and meet requirements of anti-collision and reducing occupation of entire vehicle space.

According to a first aspect, this application provides a chassis. The chassis may include a main vehicle frame and a plurality of functional pipes. The main vehicle frame includes a first longitudinal beam and a second longitudinal beam that are spaced in a width direction. To reduce occupation of entire vehicle space by the functional pipes, at least a part of the functional pipes run through a middle section of the first longitudinal beam. In addition, the first longitudinal beam may be used to physically protect the functional pipes against collision with other structures in the chassis.

In a specific implementable solution, the chassis may be a CTC chassis, and the chassis may further include a cell assembly. The cell assembly is disposed between the middle section of the first longitudinal beam and a middle section of the second longitudinal beam. In this case, the middle section of the first longitudinal beam is used as a first battery outer side beam, and the middle section of the second longitudinal beam is correspondingly used as a second battery outer side beam. This helps improve battery packing efficiency, to effectively improve a battery level and energy density and reduce thermal impact of the functional pipes on performance of cells.

In a specific implementable solution, to alleviate a problem that the functional pipes are excessively concentrated in one longitudinal beam, a part of the functional pipes may run through the middle section of the first longitudinal beam, and another part of the functional pipes run through the middle section of the second longitudinal beam. This can alleviate a problem that wiring at incoming and outgoing positions of the functional pipes is excessively dense, affecting a device arrangement in a front or rear section of a vehicle, and causing wear and thermal impact between the functional pipes.

In a specific implementable solution, to balance cross-sectional areas of functional pipes that run through a first cavity and cross-sectional areas of functional pipes that run through a second cavity as much as possible, and improve space utilization efficiency, a sum of the cross-sectional areas of the functional pipes that run through the middle section of the first longitudinal beam may be 0.85 to 1.15 times a sum of the cross-sectional areas of the functional pipes that run through the middle section of the second longitudinal beam.

In a specific implementable solution, the middle section of the first longitudinal beam is provided with a plurality of cavities. One of the cavities is used as the first cavity, and all the functional pipes in the middle section of the first longitudinal beam run through the first cavity, so that assembly of the functional pipes is more convenient and faster. Similarly, the middle section of the second longitudinal beam is provided with a plurality of cavities. One of the cavities is used as the second cavity, and all the functional pipes in the middle section of the second longitudinal beam run through the second cavity, so that assembly of the functional pipes can be more convenient and faster.

In a specific implementable solution, in a vertical direction, the middle section of the first longitudinal beam includes a plurality of layers of cavities. To use upper and lower layers of the cavities in the vertical direction to provide a buffer, the first cavity is located at a middle layer of the cavities. Similarly, in the vertical direction, the middle section of the second longitudinal beam includes a plurality of layers of cavities. The second cavity is located at a middle layer of the cavities, and upper and lower layers of the cavities in the vertical direction may also be used to provide a buffer.

In a specific implementable solution, in the width direction, the layer at which the first cavity is located includes at least two cavities. The first cavity is a cavity that is away from the middle section of the second longitudinal beam. This can reduce thermal impact on a heat emitting component (for example, the cell assembly) between the first longitudinal beam and the second longitudinal beam. Similarly, in the width direction, the layer at which the second cavity is located includes at least two cavities. The second cavity is a cavity that is away from the middle section of the first longitudinal beam. This can also reduce thermal impact on a heat emitting component (for example, the cell assembly) between the first longitudinal beam and the second longitudinal beam.

In a specific implementable solution, if a functional pipe collides with an inner wall of the first cavity in a vehicle traveling process, noise is likely to be generated. To alleviate this problem, a plurality of first supports are sequentially spaced and fastened in the first cavity, and each of the functional pipes located in the middle section of the second longitudinal beam runs through the first supports in sequence, and is spaced from the inner wall of the first cavity, to reduce collision with the inner wall of the first cavity. Similarly, a plurality of second supports may also be sequentially spaced and fastened in the second cavity, and each of the functional pipes located in the middle section of the second longitudinal beam is spaced from an inner wall of the second cavity through the second supports in sequence, to reduce noise generated when a functional pipe collides with the inner wall of the second cavity.

Both the first support and the second support may be in a plurality of forms. In a specific implementable solution, the first support may include a first limiting block. Each of the functional pipes located in the middle section of the first longitudinal beam runs through these first limiting blocks in sequence, and each of the first limiting blocks is fastened to the inner wall of the first cavity, to provide stable support for the functional pipe. The second support may also include a second limiting block. Each of the functional pipes located in the middle section of the second longitudinal beam runs through the second limiting blocks in sequence, and each of the second limiting blocks is fastened to the inner wall of the second cavity, to provide stable support for the functional pipe.

In a specific implementable solution, the first limiting block may be made of an elastic material. In this case, the first limiting block and the inner wall of the first cavity may implement an interference fit, to enhance a fastening effect by using elasticity. Similarly, the second limiting block is also made of an elastic material, and the second limiting block and the inner wall of the second cavity may also implement an interference fit, to enhance a fastening effect by using elasticity.

In a specific implementable solution, the first limiting block may be made of rubber, to enhance, by using a high coefficient of friction of the rubber, an effect of fastening to the inner wall of the first cavity by using a friction force. Similarly, the second limiting block may also be made of rubber, to enhance, by using a large friction force, an effect of fastening to the inner wall of the second cavity.

In a specific implementable solution, a distance between every two adjacent first supports may be between 600 mm and 900 mm. In this range, the first supports are not too sparse to cause the functional pipes to sag or even contact each other, or the first supports or the second supports are not too dense to increase costs. Similarly, a distance between every two adjacent second supports may be between 600 mm and 900 mm.

In a specific implementable solution, a distance between every two adjacent functional pipes located in the middle section of the first longitudinal beam is between 6 mm and 30 mm, to alleviate a problem that different functional pipes cannot be effectively isolated due to an excessively short distance and consequently collision and wear are likely to be caused between the functional pipes when the vehicle jolts, and a problem of excessively large space occupation due to an excessively long distance that is between different functional pipes and that contributes nothing to prevention of collision between the different functional pipes. Similarly, a distance between every two adjacent functional pipes located in the middle section of the second longitudinal beam is between 6 mm and 30 mm to achieve similar effects.

In a specific implementable solution, in consideration of safety, the functional pipes that run through the middle section of the first longitudinal beam include a brake pipe. In addition, the functional pipes that run through the middle section of the second longitudinal beam also include a brake pipe. Even if the brake pipe in one middle section in the middle sections of the first longitudinal beam and the second longitudinal beam is damaged due to collision, the brake pipe in the other middle section can still complete a brake in an emergency, to meet a safety requirement.

According to a second aspect, a vehicle is provided. The vehicle includes an upper vehicle body and the chassis according to any one of the foregoing technical solutions, and the upper vehicle body is fastened to a first longitudinal beam and a second longitudinal beam. For beneficial effects of the chassis, refer to those of the chassis provided in the foregoing technical solutions.

### BRIEF DESCRIPTION OF DRAWINGS

FIG. 1 is a diagram of a structure of a chassis according to an embodiment of this application;
FIG. 2 is a diagram of a structure of a first battery outer side beam 11 and a second battery outer side beam 21 in FIG. 1;
FIG. 3 is a diagram of distribution of a first pipe group 12 and a second pipe group 22 in FIG. 2;
FIG. 4 is a sectional view of A-A in FIG. 2;
FIG. 5 is a partial enlarged diagram of E in FIG. 3;
FIG. 6 is a sectional view of B-B in FIG. 2;
FIG. 7 is a partial enlarged diagram of F in FIG. 3;
FIG. 8 shows a variation of a structure shown in FIG. 6;
FIG. 9 shows another variation of a structure shown in FIG. 4;
FIG. 10 shows a variation of the structure shown in FIG. 6;
FIG. 11 shows another variation of the structure shown in FIG. 4;
FIG. 12 shows another variation of the structure shown in FIG. 4;
FIG. 13 shows another variation of the structure shown in FIG. 6;
FIG. 14 shows another variation of the structure shown in FIG. 4;
FIG. 15 shows another variation of the structure shown in FIG. 6;
FIG. 16 shows another variation of the structure shown in FIG. 4;
FIG. 17 shows another variation of the structure shown in FIG. 6;
FIG. 18 shows another variation of the structure shown in FIG. 4;
FIG. 19 shows another variation of the structure shown in FIG. 6; and
FIG. 20 shows a vehicle according to an embodiment of this application.

### DESCRIPTION OF EMBODIMENTS

To make the objectives, technical solutions, and advantages of this application clearer, the following further describes this application in detail with reference to the accompanying drawings.

A main vehicle frame is a frame structure located at a lower part of an upper vehicle body, and runs through a vehicle from front to rear. The main vehicle frame includes a front section, a middle section, and a rear section. The main vehicle frame is used to support and connect various assemblies of the vehicle, such as the upper vehicle body, a chassis, a power battery, and an electric drive system, so that the assemblies are in relatively correct positions and the main vehicle frame bears various loads inside and outside the vehicle.

The front section of the main vehicle frame is a region of the main vehicle frame that is used to carry a front drive system and that is connected to front suspension or a front wheel, and is a part of the main vehicle frame located in front of a firewall or a front torsion box.

The middle section of the main vehicle frame is a region of the main vehicle frame that is used to carry a battery pack system and that is connected to a passenger cabin of the upper vehicle body, and is a part of the main vehicle frame between the front torsion box and a rear torsion box.

The rear section of the main vehicle frame is a region of the main vehicle frame that is used to carry a rear drive system and that is connected to rear suspension or a rear wheel, and is a part of the main vehicle frame located in the rear of the rear torsion box.

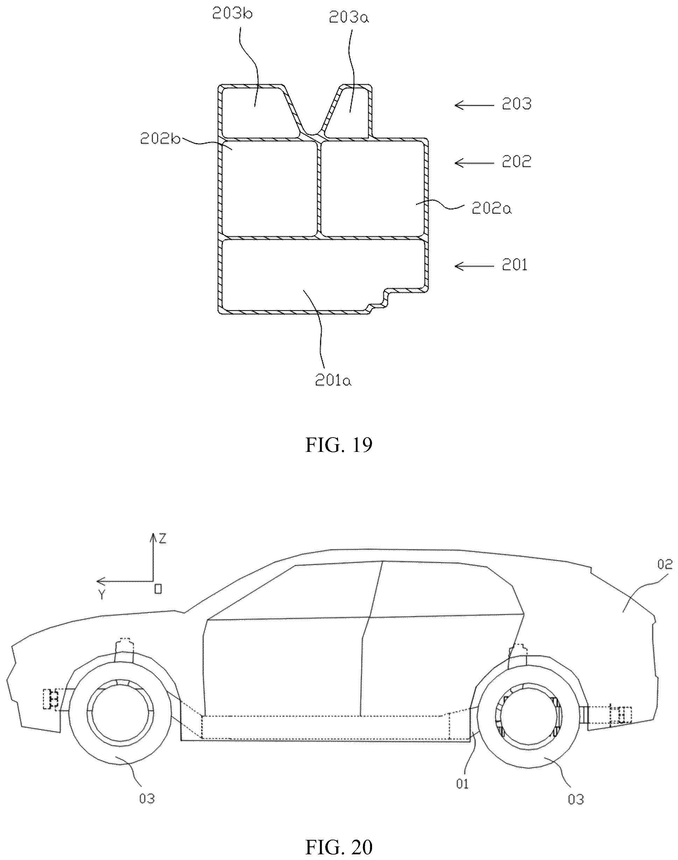

For a clearer understanding of the chassis provided in embodiments of this application, the following describes an application scenario of the chassis. Refer to FIG. 20 in the following embodiments. A chassis 01 provided in an embodiment of this application may be a skateboard chassis, a chassis in a vehicle of a unibody model, or a chassis in a vehicle of a body-on-frame model. The chassis 01 and an upper vehicle body 02 are independently made, and the upper vehicle body 02 may be assembled onto an upper surface of the chassis 01 in a manner like bolting or welding, to form a complete vehicle.

In a CTC chassis, a cell may be directly integrated into the chassis. A CTC battery outer side beam is integrated with a longitudinal beam in the middle section of the main vehicle frame (or referred to as a vehicle body threshold beam) of the chassis. There is no space between the two beams for arranging functional pipes such as a vehicle brake pipe, an air spring gas pipe, a cooling water pipe, and a rear air conditioner refrigerant pipe. The preceding functional pipes of a plurality of types require new arrangement space in a front-rear direction, and the arrangement space needs to meet requirements such as anti-collision protection, maintenance convenience, and battery space saving. In other conventional fuel vehicles and electric vehicles using a non-CTC technology, there is also a problem of an inappropriate arrangement of functional pipes, and consequently, collision with the functional pipes and occupation of entire vehicle space are likely to be caused.

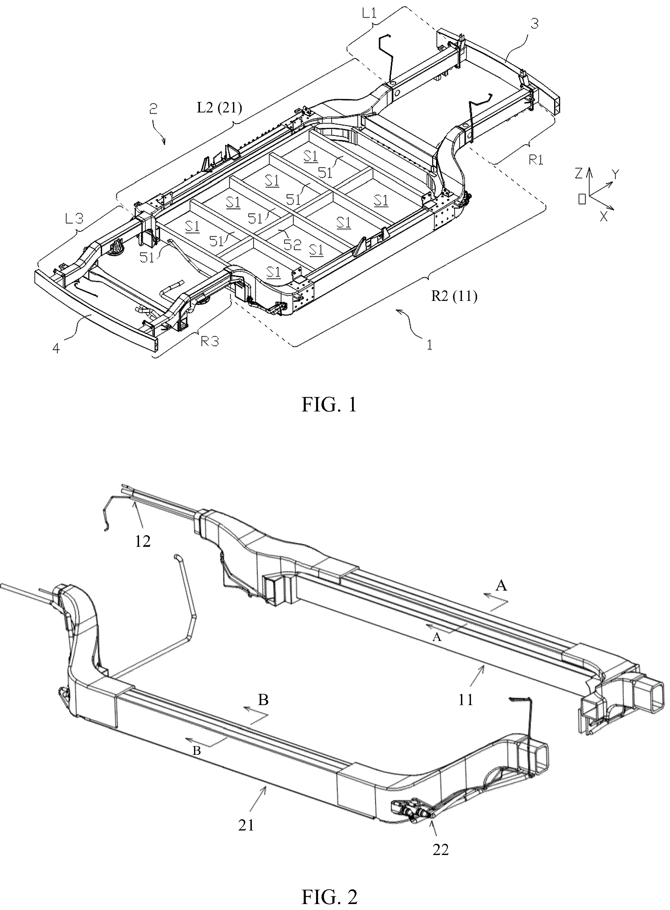

FIG. 1 is a diagram of a structure of a chassis according to an embodiment of this application. FIG. 1 shows only a partial structure related to an inventive concept of embodiments of this application. A CTC chassis is used as an example. Refer to FIG. 1. The chassis provided in this embodiment of this application includes a main vehicle frame, a cell assembly (not shown in the figure), and a plurality of functional pipes. The cell assembly includes a plurality of cells, and the functional pipes may include a brake pipe, an air spring gas pipe, a cooling water pipe, an air conditioner refrigerant pipe, and the like. The main vehicle frame includes a first longitudinal beam 1 and a second longitudinal beam 2. Both the first longitudinal beam 1 and the second longitudinal beam 2 extend in a longitudinal direction Y, and the first longitudinal beam 1 and the second longitudinal beam 2 are arranged in a width direction X. A direction perpendicular to both the longitudinal direction Y and the width direction X is a vertical direction Z. The width direction X is a width direction of a vehicle. The longitudinal direction Y is a front-rear direction of the vehicle. The vertical direction Z is a height direction of the vehicle. The first longitudinal beam 1 includes a front section L1, a middle section L2, and a rear section L3 in sequence from front to rear in the longitudinal direction Y, and the second longitudinal beam 2 includes a front section R1, a middle section R2, and a rear section R3 in sequence from front to rear in the longitudinal direction Y. The front section L1, the middle section L2, and the rear section L3 are disposed in a one-to-one correspondence with the front section R1, the middle section R2, and the rear section R3 in the width direction X. The first longitudinal beam 1 and the second longitudinal beam 2 are connected by a plurality of horizontal beams, and the horizontal beams may specifically include a front-end cap horizontal beam 3 and a rear-end cap horizontal beam 4. The front-end cap horizontal beam 3 is connected to a free end of the front section L1 and a free end of the front section R1, and the rear-end cap horizontal beam 4 is connected to a free end of the rear section L3 and a free end of the rear section R3, to respectively cap two ends of the first longitudinal beam 1 and the second longitudinal beam 2.

A plurality of positioning horizontal beams 51 are also connected between the middle section L2 and the middle section R2. The plurality of positioning horizontal beams 51 are sequentially spaced in the longitudinal direction Y. Middle parts of all the positioning horizontal beams 51 are sequentially connected by a positioning longitudinal beam 52, to divide the middle section L2 and the middle section R2 into a plurality of cell mounting regions S1 arranged in a matrix. One or more cells may be fastened in each mounting region. The middle section L2 and the middle section R2 play a role of fastening outer side beams of the entire cell assembly. Therefore, the middle section L1 is used as a first battery outer side beam 11, and the middle section L2 is used as a second battery outer side beam 21. A quantity and an arrangement manner of the positioning horizontal beams 51 and the positioning longitudinal beam 52 are not limited to the foregoing form, and may be specifically adjusted based on a quantity of cells. For example, there may alternatively be a plurality of positioning longitudinal beams 52.

The main vehicle frame may be prepared in the following manner: The rear-end cap horizontal beam 4, the rear section L3, and the rear section R3 are pre-assembled and formed as a front section of the entire main vehicle frame; the front-end cap horizontal beam 3, the front section L1, and the front section R1 are pre-assembled and formed as a rear section of the entire main vehicle frame; and the middle section L2, the middle section R2, the positioning horizontal beams 51, and the positioning longitudinal beam 52 are pre-assembled and formed as a middle section of the entire main vehicle frame. Then, the front section, the middle section, and the rear section of the main vehicle frame are sequentially assembled to form the main vehicle frame. Specifically, the rear section L3 may be inserted into an opening at a corresponding end of the middle section L2 and fastened. The rear section R3 may be inserted into an opening at a corresponding end of the middle section R2 and fastened. The rear section L3 may be inserted into an opening at a corresponding end of the middle section L2 and fastened. The front section L1 may be inserted into an opening at a corresponding end of the middle section L2 and fastened. The front section R1 may be inserted into an opening at a corresponding end of the middle section R2 and fastened. However, a manner of preparing the main vehicle frame is not limited to the foregoing manner. The front section, the middle section, and the rear section of the entire main vehicle frame may be integrally cast. A manner of disposing horizontal beams between the first longitudinal beam 1 and the second longitudinal beam 2 is also not limited to the foregoing manner, and the horizontal beams may be disposed at different positions according to a requirement on structural stability.

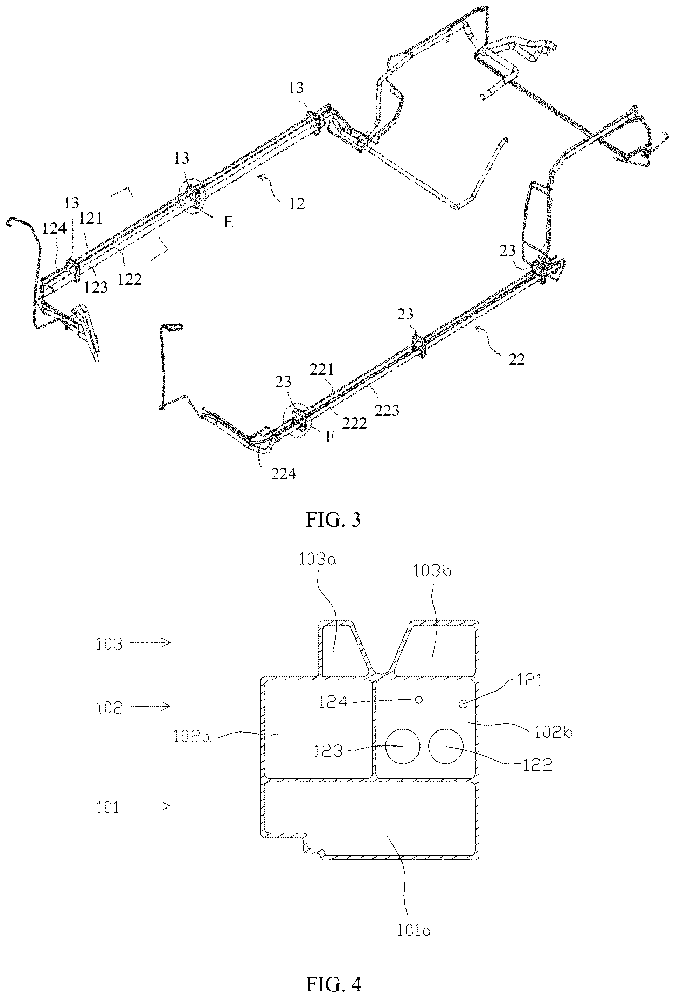

An electric vehicle with a hydraulic brake system, an air suspension system, a liquid-cooled rear electric drive system, and a third-row independent air conditioning system is used as an example. FIG. 2 is a diagram of a structure of the first battery outer side beam 11 and the second battery outer side beam 21 in FIG. 1, and FIG. 3 is a diagram of distribution of a first pipe group 12 and a second pipe group 22 in FIG. 2. With reference to FIG. 2 and FIG. 3, the foregoing functional pipes are grouped into two groups: the first pipe group 12 and the second pipe group 22. The first pipe group 12 includes a brake pipe 124, an air spring gas pipe 121, a cooling water pipe 122, and a cooling water pipe 123. The second pipe group 22 includes a brake pipe 221, an air spring gas pipe 222, an air conditioner refrigerant pipe 223, and an air conditioner refrigerant pipe 224. The cooling water pipe 122 and the cooling water pipe 123 are used in the liquid-cooled rear electric drive system. One of the cooling water pipe 122 and the cooling water pipe 123 may be a water supply pipe, and the other may be a water return pipe. The two cooling water pipes are disposed in a same battery outer side beam, to balance sums of cross-sectional areas of the functional pipes in the two battery outer side beams, thereby making full use of space. The brake pipe 124 and the brake pipe 221 are used in the hydraulic brake system, and are distributed in different battery outer side beams, so that the brake pipe 124 and the brake pipe 221 are separately connected to vibration dampers of left and right wheels. In addition, once the brake pipe in one battery outer side beam is damaged due to collision or another factor, the brake pipe in the battery outer side beam on the other side still has a braking function for a brake in an emergency, to meet a safety requirement. The air spring gas pipe 121 and the air spring gas pipe 222 are used in the air suspension system, and are distributed in different battery outer side beams, so that the air spring gas pipe 121 and the air spring gas pipe 222 separately lead to the vibration dampers of the left and right wheels. The air conditioner refrigerant pipe 223 and the air conditioner refrigerant pipe 224 are used in the third-row independent air conditioning system, and are both rigid pipes that need to maintain specific pressure. One of the air conditioner refrigerant pipe 223 and the air conditioner refrigerant pipe 224 is a high-pressure refrigerant pipe, and the other is a low-pressure refrigerant pipe. The two pipes are disposed in a same battery outer side beam, so that a same sealing flange is connected to incoming and outgoing positions of the battery outer side beam, to simplify a structure and reduce costs. The sealing flange has a fastening and sealing function, to alleviate a problem of a pressure change caused by leakage of the high-pressure refrigerant pipe and the low-pressure refrigerant pipe. The first pipe group 12 runs through the first battery outer side beam 11, and the second pipe group 22 runs through the second battery outer side beam 21.

The following describes distribution of the first pipe group 12 in the first battery outer side beam 11 and distribution of the second pipe group 22 in the second battery outer side beam 21. FIG. 4 is a sectional view of A-A in FIG. 2. As shown in FIG. 4, the first battery outer side beam 11 includes a first cavity layer 101, a second cavity layer 102, and a third cavity layer 103 in sequence from bottom to top in the vertical direction Z. In the width direction X, in a direction away from the second battery outer side beam 21, the first cavity layer 101 includes only a cavity 101a with a flat and wide cross section, the second cavity layer 102 includes a cavity 102a and a cavity 102b, and the third cavity layer 103 includes a cavity 103a and a cavity 103b. A lower left corner of the cavity 101a is concave to form a step structure. In one aspect, this increases side-wall support strength of the cavity 101a. In another aspect, this helps avoid an adjacent structure. Cross sections of the cavity 102a and the cavity 102b are roughly squares, and a sum of widths of the cavity 102a and the cavity 102b is equal to a width of the cavity 101a. Cross sections of the cavity 103a and the cavity 103b are both right-angled trapezoids. An oblique edge of the cavity 103a and an oblique edge of the cavity 103b are disposed opposite to each other, and the oblique edge of the cavity 103a and the oblique edge of the cavity 103b are connected to each other to form a "V"-shaped groove. A vertical side edge of the cavity 103b is flush with a vertical side edge corresponding to the cavity 102b and a corresponding side edge of the cavity 101a. During preparation, the first battery outer side beam 11 may be specifically formed by extrusion by using an aluminum profile, to form an integrated side beam. A cross section of the first battery outer side beam 11 is designed as a structure with three layers of five cavities in total, to meet a requirement for reducing a weight while meeting requirements on strength, rigidity, and functional pipe assembly space. The cavity 102b is used as a first cavity, and the brake pipe 124, the air spring gas pipe 121, the cooling water pipe 122, and the cooling water pipe 123 in the first pipe group 12 all run through the first cavity, so that the functional pipes in the first pipe group 12 are assembled into the first battery outer side beam 11 at a time, thereby reducing assembly difficulty and improving production efficiency.

The first pipe group 12 is located in the first cavity at a middle layer (the second cavity layer 102), and both the upper third cavity layer 103 and the lower first cavity layer 101 may physically protect the first cavity in the vertical direction and have a vibration damping function, to ensure stability of fastening the functional pipes in the first pipe group 12. In addition, the first cavity is located at a position that is at the second cavity layer 102 and that is farthest away from a cell, which helps minimize heat exchange between the first pipe group 12 and the cell, alleviate a case in which performance of the cell is degraded due to excessive heat, and also slow down heating of the cooling water pipe 122 and the cooling water pipe 123 by the cell that affects a cooling effect. It is only required that the first battery outer side beam 11 is provided with a plurality of layers of cavities distributed in the vertical direction Z, and the first cavity at the middle layer of the cavities is away from the second battery outer side beam 21. The layer at which the first cavity is located is provided with at least two cavities distributed in the width direction X.

In addition, a plurality of first limiting blocks 13 are sequentially disposed in the first cavity in an extension direction of the first cavity (the cavity 102b). An outer contour of the first limiting block 13 is also roughly a square, to adapt to an inner wall of the first cavity. Each functional pipe in the first pipe group 12 runs through the first limiting blocks 13 in sequence and is fastened to each of the first limiting blocks 13. Specifically, through holes that are in a one-to-one correspondence with the functional pipes in the first pipe group 12 may be provided on the first limiting blocks 13. An inner diameter of a through hole may be consistent with an outer diameter of a corresponding functional pipe, or may be slightly less than the outer diameter of the corresponding functional pipe, to implement an interference fit. The outer contour of each first limiting block 13 adapts to an inner contour of the first cavity, and the first limiting block 13 is fastened to the inner wall of the first cavity. The first limiting block 13 may be specifically made of an elastic material like rubber to be extruded by the inner wall of the first cavity to deform for an interference fit with the inner wall of the first cavity, thereby simplifying a mounting process of the first limiting block 13 and facilitating detachment of the first limiting block 13. In addition, the first limiting block 13 made of the elastic material can reduce scratching and damage to a surface of the functional pipe, which is conducive to protecting the functional pipe and providing an elastic buffer for the functional pipe. The rubber used to make the first limiting block 13 not only has good elasticity, but also has a high coefficient of friction, so that the first limiting block is fastened to the inner wall of the first cavity by using a friction force, and each functional pipe that runs through the limiting block is fastened by using a friction force.

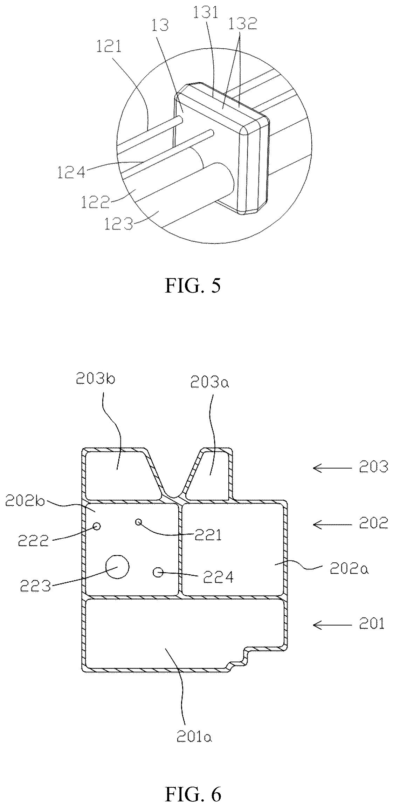

FIG. 5 is a partial enlarged diagram of E in FIG. 3. As shown in FIG. 5, a convex edge 131 surrounding the first limiting block 13 is formed on a circumferential surface of the first limiting block 13. The first convex edge 131 may be formed by guide slopes 132 located on two sides of the convex edge. When the first limiting block 13 is assembled into the first cavity, the guide slopes 132 may play a guide role, so that the convex edge 131 is more likely to be extruded and deformed by the inner wall of the first cavity, to implement an interference fit. Alternatively, a convex curved surface is formed on a circumferential surface of the first limiting block 13 and used as the first convex edge 131, which is also conducive to implementation of the interference fit.

However, fastening of the first limiting block 13 is not limited to this manner, and the first limiting block 13 may alternatively be fastened by using a structure like a bolt that penetrates a side wall of the first cavity.

The first limiting blocks 13 separately support each functional pipe in the first pipe group 12, to limit a position of the functional pipe, so that a specific gap can be maintained between every two functional pipes. This reduces noise and wear due to collision between adjacent functional pipes, reduces heat exchange, reduces wear caused by contact between the functional pipe and the inner wall of the first cavity, and also reduces high noise caused by collision between the functional pipe and the inner wall of the first cavity during a jolt. In the extension direction of the first cavity (the cavity 102b), a plurality of first limiting blocks 13 are sequentially disposed in the first cavity. A specific quantity of first limiting blocks may be 2, 3, 4, 5, or the like. To alleviate sag of the functional pipe at two ends, one first limiting block 13 may be disposed at each of positions close to two ends of the first battery outer side beam 11. Each time the functional pipe runs through a first limiting block 13, position correction is performed once, to alleviate mutual contact between functional pipes caused by sag due to factors such as gravity. Therefore, a distance between every two adjacent first limiting blocks 13 is between 600 mm and 900 mm, for example, may be 600 mm, 700 mm, 750 mm, 800 mm, 850 mm, or 900 mm, to alleviate a case in which the functional pipes sag and are in contact with each other because the first limiting blocks 13 are excessively sparse, or alleviate a case in which costs are increased and difficulty in assembling the functional pipes and the first limiting blocks 13 into the first cavity is increased because the first limiting blocks 13 are excessively dense. A distance between every two adjacent functional pipes is between 6 mm and 30 mm, for example, may be 6 mm, 10 mm, 15 mm, 20 mm, 25 mm, or 30 mm, to alleviate a problem that the functional pipes cannot be effectively isolated due to an excessively short distance and consequently collision and wear are likely to be caused when the vehicle jolts, and alleviate a problem of an excessively long distance that is between different functional pipes and that contributes nothing to prevention of collision between the different functional pipes, but leads to excessively large space occupation. In addition, positions of the through holes for the functional pipes to run through are the same on the first limiting blocks 13, and each functional pipe runs through the same positions on different first limiting blocks 13 to prevent the same functional pipe from twisting due to a change in a support position caused when the functional pipe runs through the different first limiting blocks 13, which damages the functional pipe, or causes a change in relative positions of different functional pipes or even mutual contact between the functional pipes. Specifically, refer to FIG. 3 and FIG. 5. In the first pipe group 12, both the brake pipe 124 and the air spring gas pipe 121 are located at an upper half part of each first limiting block 13, and in the width direction X, the air spring gas pipe 121 is all located on a side that is of the brake pipe 124 and that is away from the second battery outer side beam 21. The cooling water pipe 122 and the cooling water pipe 123 are located at a lower half part of each first limiting block 13, and in the width direction X, the cooling water pipe 122 is all located on a side that is of the cooling water pipe 123 and that is away from the second battery outer side beam 21. Therefore, the brake pipe 124, the air spring gas pipe 121, the cooling water pipe 122, and the cooling water pipe 123 may all run through the first cavity of the first battery outer side beam 11 straightly, and are not likely to twist. This helps protect structural stability of the functional pipes and alleviate a problem of a change in a distance between different pipes. However, it should be understood that, in this embodiment of this application, it is also allowed that through holes corresponding to a same functional pipe on different first limiting blocks 13 deviate to a specific extent, provided that an order of different functional pipes does not change. For example, the cooling water pipe 122 and the cooling water pipe 123 deviate as a whole by a short distance from a direction away from the second battery outer side beam 21. In this way, different functional pipes are also not in contact with each other, but extension paths of the cooling water pipe 122 and the cooling water pipe 123 are changed to some extent. In FIG. 3, both the cooling water pipe 122 and the cooling water pipe 123 are located at a lower half part of the brake pipe 124 and the air spring gas pipe 121. In some unexpected cases, when the cooling water pipe 122 and the cooling water pipe 123 are damaged, cooling water leaks but is not likely to spill onto the brake pipe 124 and the air spring gas pipe 121. This alleviates a case in which performance of the brake pipe 124 and the air spring gas pipe 121 is affected, for example, a case in which brake performance of the brake pipe 124 is degraded and spring performance of the air spring gas pipe 121 is degraded due to rusting caused by contact with the cooling water.

In the foregoing, the brake pipe 124, the air spring gas pipe 121, the cooling water pipe 122, and the cooling water pipe 123 in the first pipe group 12 use cavity space in the first battery outer side beam 11 that is used as a support structure, to reduce occupation of cell arrangement space by the functional pipes. This helps improve battery packing efficiency, to effectively improve both a battery level and energy density. This can also reduce impact of the functional pipes on performance of the cell, for example, alleviate a case in which a temperature of the cell increases due to heat emitted by the cooling water pipe 122 and the cooling water pipe 123, or the cell is damaged or even a vehicle accident occurs due to water inlet caused by damage of the cooling water pipe 122 and the cooling water pipe 123. In addition, a side wall of the strong structure of the first battery outer side beam 11 can be used to physically protect the first pipe group 12 against collision with other structures in the chassis. During assembly, it is only necessary to sleeve the foregoing functional pipes with the first limiting blocks 13, fasten the first limiting blocks 13 to the functional pipes, and then assemble a fastened structure into the first cavity, so that the first limiting blocks 13 are in an interference fit with the inner wall of the first cavity, and assembly is convenient. When a functional pipe needs to be repaired, the functional pipe is extracted from the first cavity, and maintenance is convenient.

In addition, the brake pipe 124, the air spring gas pipe 121, the cooling water pipe 122, and the cooling water pipe 123 in the first pipe group 12 are all centralized in the first cavity. Compared with distribution in different cavities, this can reduce a quantity of first limiting blocks 13 to be assembled. The quantity of first limiting blocks 13 to be assembled is reduced, so that only one set of first limiting blocks 13 needs to be used for unified limiting and assembly into the first cavity, thereby reducing assembly difficulty, saving assembly time, and improving production efficiency.

In addition, only a plurality of first supports sequentially spaced and fastened in the first cavity are needed. Each functional pipe in the first pipe group 12 runs through the first supports in sequence for limiting, so that the functional pipe is spaced from the inner wall of the first cavity, to reduce generation of noise. In addition to the first limiting blocks 13 for limiting the functional pipes in the first pipe group 12, a form of the first support may be a rigid support that is detachably connected or welded to the inner wall of the first cavity to support the functional pipes.

FIG. 6 is a sectional view of B-B in FIG. 2. As shown in FIG. 6, the second battery outer side beam 21 includes a fourth cavity layer 201, a fifth cavity layer 202, and a sixth cavity layer 203 in sequence from bottom to top in the vertical direction Z. In the width direction X, in a direction away from the first battery outer side beam 11, the fourth cavity layer 201 includes a cavity 201a, the fifth cavity layer 202 includes a cavity 202a and a cavity 202b, and the sixth cavity layer 203 includes a cavity 203a and a cavity 203b. The cavities at the fourth cavity layer 201, the fifth cavity layer 202, and the sixth cavity layer 203 are in a mirror relationship with the cavities at the first cavity layer 101, the second cavity layer 102, and the third cavity layer 103 in sequence. For related structural descriptions and effect analysis, refer to related descriptions of the first battery outer side beam 11. For a possible variation of the second battery outer side beam 21, refer to a related variation of the first battery outer side beam 11. In some cases, structures of the two beams are always mirror-symmetric, but in other cases, the two beams may alternatively be in a non-mirror relationship. The cavity 202b is used as the second cavity, and the brake pipe 221, the air spring gas pipe 222, the air conditioner refrigerant pipe 223, and the air conditioner refrigerant pipe 224 in the second pipe group 22 all run through the second cavity, to reduce assembly difficulty and improve production efficiency.

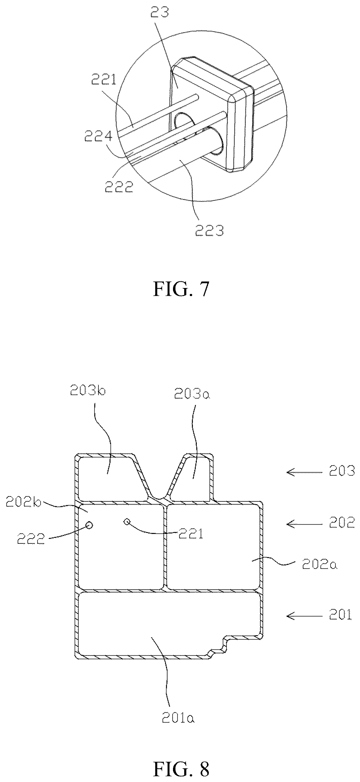

FIG. 7 is a partial enlarged diagram of F in FIG. 3. With reference to FIG. 6 and FIG. 7, a plurality of second limiting blocks 23 are sequentially spaced in the second cavity, and each functional pipe in the second pipe group 22 runs through the second limiting blocks 23 in sequence and is limited by the second limiting blocks 23, to alleviate noise and wear caused by collision between two adjacent functional pipes. For a mounting manner, a material, and the like of the second limiting block 23, refer to those of the first limiting block 13.

For an arrangement of the functional pipes in the second pipe group 22, refer to FIG. 6 and FIG. 7. The brake pipe 221 and the air spring gas pipe 222 are disposed side by side at an upper part. In the width direction X, the air spring gas pipe 222 is located on a side that is of the brake pipe 221 and that is away from the first battery outer side beam 11. The air conditioner refrigerant pipe 223 and the air conditioner refrigerant pipe 224 are disposed side by side below the brake pipe 221 and the air spring gas pipe 222, to alleviate a problem that performance of the brake pipe 221 and the air spring gas pipe 222 is affected due to leakage of refrigerant in the air conditioner refrigerant pipe 223 and the air conditioner refrigerant pipe 224.

For a disposing manner of the functional pipes in the second pipe group 22 and a fitting relationship with the second limiting block 23, refer to those of the first pipe group 12.

The second limiting block 23 is used as a type of second support, and may alternatively be replaced with a second support in another form, for example, a rigid support. Each functional pipe in the second pipe group 22 runs through the second supports in sequence for limiting, to reduce noise. For other related descriptions of the second support, refer to those of the first support.

The first pipe group 12 and the second pipe group 22 are separately disposed, instead of being centrally disposed in the first battery outer side beam 11 or the second battery outer side beam 21, to alleviate a problem that wiring at incoming and outgoing positions of the functional pipes is excessively dense, which affects a device arrangement in a front or rear section of the vehicle, and causes wear and thermal impact between the functional pipes. The air conditioner refrigerant pipes (223 and 224) and the cooling water pipes (122 and 123) are separately disposed in different battery outer side beams, to alleviate a problem that heat exchange affects a cooling effect.

A distance between every two adjacent second limiting blocks 23 is between 600 mm and 900 mm, for example, may be 600 mm, 700 mm, 750 mm, 800 mm, 850 mm, or 900 mm. For beneficial effects, refer to effects achieved by the disposing distance between the first limiting blocks 13. A distance between every two adjacent functional pipes in the second pipe group 22 is between 6 mm and 30 mm, for example, may be 6 mm, 10 mm, 15 mm, 20 mm, 25 mm, or 30 mm. For beneficial effects, refer to effects achieved by the distance between adjacent functional pipes in the first pipe group 12.

The foregoing functional pipes are not centrally arranged in the first battery outer side beam 11 or the second battery outer side beam 21, to alleviate the problem that wiring at the incoming and outgoing positions of the functional pipes is excessively dense, which affects a device arrangement in a front or rear section of the chassis, and causes wear and thermal impact between the functional pipes. In addition, a sum of cross-sectional areas of the functional pipes in the first cavity of the first battery outer side beam 11 is 0.85 times to 1.15 times of a sum of cross-sectional areas of the functional pipes in the second cavity of the second battery outer side beam 21, for example, 0.85 times, 0.9 times, 0.95 times, 1 time, 1.05 times, 1.1 times, or 1.15 times, so that the cross-sectional areas of the functional pipes that run through the first cavity and the second cavity tend to be balanced, to improve space utilization efficiency. Improvement of the space utilization efficiency alleviates a problem that in one cavity, due to excessively dense functional pipes, wiring at incoming and outgoing positions of the functional pipes is excessively dense, affecting the device arrangement in the front or rear section of the chassis, and causing wear and thermal impact between the functional pipes, and in the other cavity, space cannot be fully used due to excessively sparse functional pipes.

FIG. 8 shows a variation of the structure shown in FIG. 6. For an electric vehicle model that uses a hydraulic brake system, an air suspension system, and a liquid-cooled rear electric drive system, with reference to FIG. 8 and FIG. 4, the air conditioner refrigerant pipe 223 and the air conditioner refrigerant pipe 224 are removed from the structure in the embodiments corresponding to FIG. 2 to FIG. 7. For other descriptions of a structure and an effect, refer to the embodiments corresponding to FIG. 2 to FIG. 7.

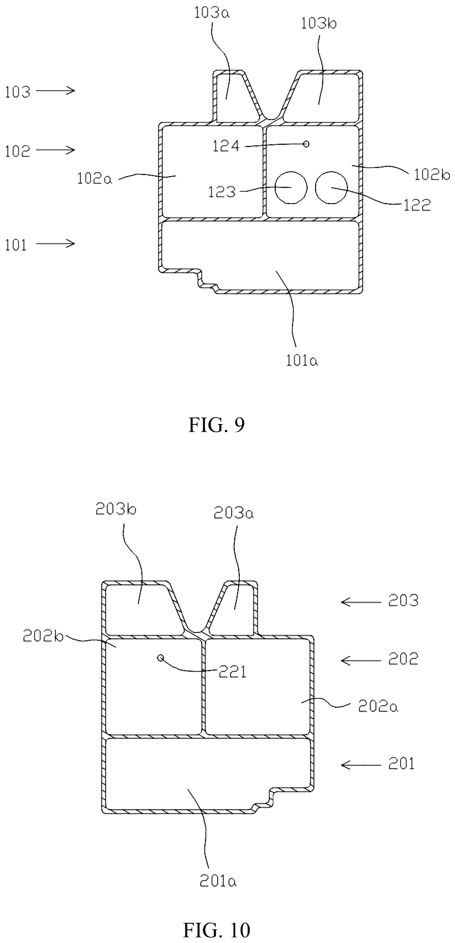

FIG. 9 shows another variation of the structure shown in FIG. 4, and FIG. 10 shows a variation of the structure shown in FIG. 6. For an electric vehicle model that uses a hydraulic brake system and a liquid-cooled rear electric drive system, with reference to FIG. 9 and FIG. 10, the air conditioner refrigerant pipe 223, the air conditioner refrigerant pipe 224, the air spring gas pipe 121, and the air spring gas pipe 222 are removed from the structure in the embodiments corresponding to FIG. 2 to FIG. 7. For other descriptions of a structure and an effect, refer to the embodiments corresponding to FIG. 2 to FIG. 7.

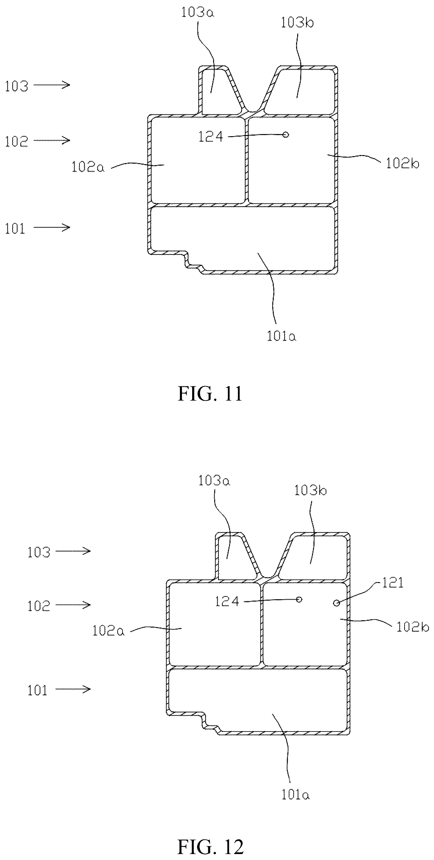

FIG. 11 shows another variation of the structure shown in FIG. 4. For an electric vehicle model that uses a hydraulic brake system, with reference to FIG. 11 and FIG. 10, the air conditioner refrigerant pipe 223, the air conditioner refrigerant pipe 224, the air spring gas pipe 121, the air spring gas pipe 222, the cooling water pipe 122, and the cooling water pipe 123 are removed from the structure in the embodiments corresponding to FIG. 2 to FIG. 7. For other descriptions of a structure and an effect, refer to the embodiments corresponding to FIG. 2 to FIG. 7.

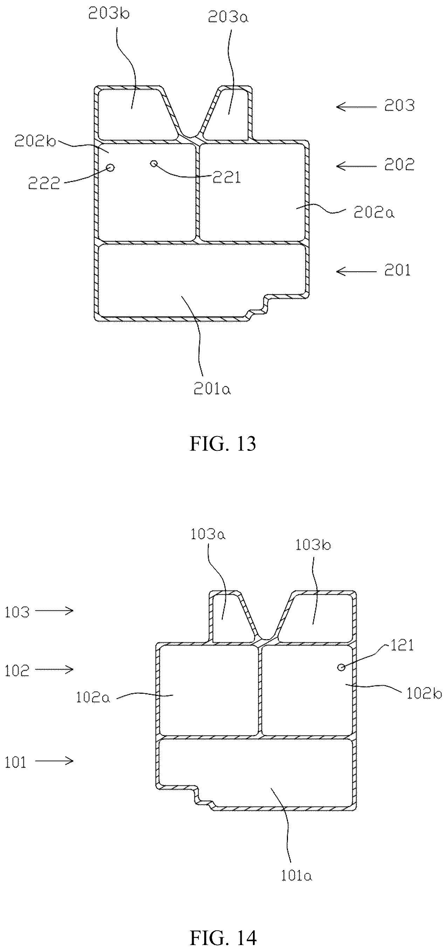

FIG. 12 shows another variation of the structure shown in FIG. 4, and FIG. 13 shows another variation of the structure shown in FIG. 6. For an electric vehicle model that uses a hydraulic brake system and an air suspension system, with reference to FIG. 12 and FIG. 13, the air conditioner refrigerant pipe 223, the air conditioner refrigerant pipe 224, the cooling water pipe 122, and the cooling water pipe 123 are removed from the structure in the embodiments corresponding to FIG. 2 to FIG. 7. For other descriptions of a structure and an effect, refer to the embodiments corresponding to FIG. 2 to FIG. 7.

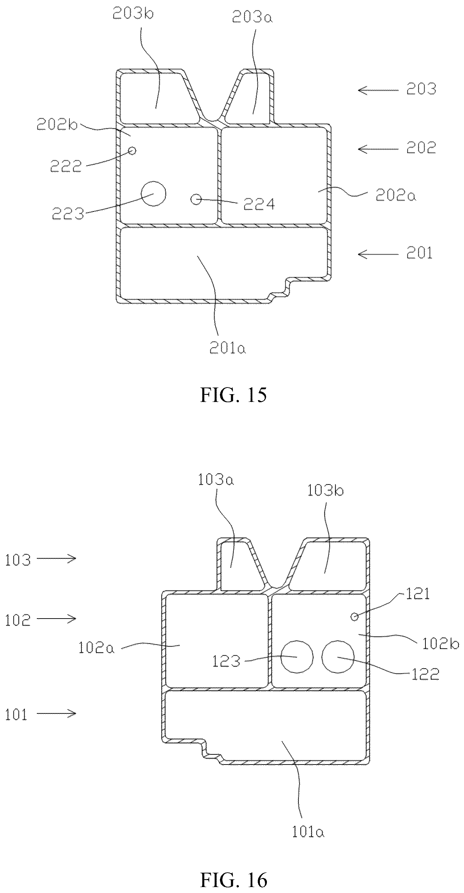

FIG. 14 shows another variation of the structure shown in FIG. 4, and FIG. 15 shows another variation of the structure shown in FIG. 6. For an electric vehicle model that uses an air suspension system and a third-row independent air conditioning system, with reference to FIG. 14 and FIG. 15, the brake pipe 124, the brake pipe 221, the cooling water pipe 122, and the cooling water pipe 123 are removed from the structure in the embodiments corresponding to FIG. 2 to FIG. 7. For other descriptions of a structure and an effect, refer to the embodiments corresponding to FIG. 2 to FIG. 7.

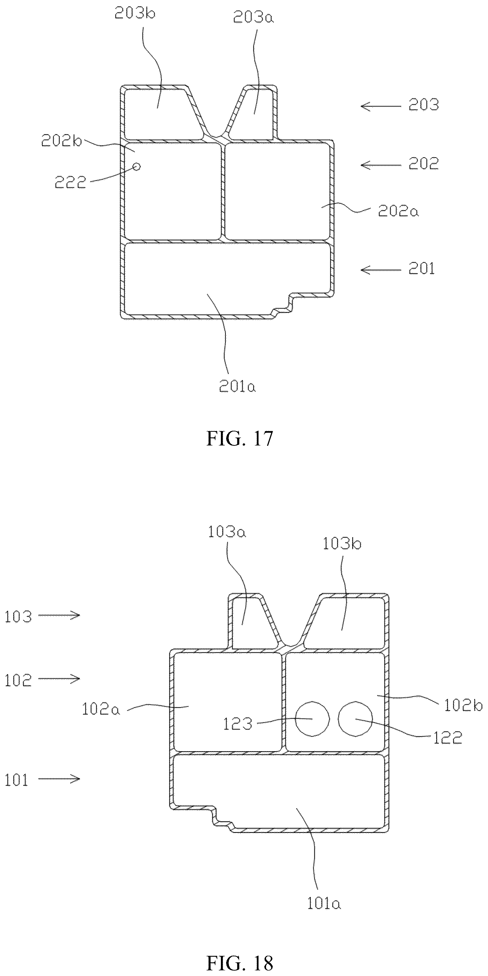

FIG. 16 shows another variation of the structure shown in FIG. 4, and FIG. 17 shows another variation of the structure shown in FIG. 6. For an electric vehicle model that uses an air suspension system and a liquid-cooled rear electric drive system, with reference to FIG. 16 and FIG. 17, the brake pipe 124, the brake pipe 221, the air conditioner refrigerant pipe 223, and the air conditioner refrigerant pipe 224 are removed from the structure in the embodiments corresponding to FIG. 2 to FIG. 7. For other descriptions of a structure and an effect, refer to the embodiments corresponding to FIG. 2 to FIG. 7.

FIG. 18 shows another variation of the structure shown in FIG. 4, and FIG. 19 shows another variation of the structure shown in FIG. 6. For an electric vehicle model that uses a liquid-cooled rear electric drive system, with reference to FIG. 18 and FIG. 19, the brake pipe 124, the brake pipe 221, the air conditioner refrigerant pipe 223, the air conditioner refrigerant pipe 224, the air spring gas pipe 121, and the air spring gas pipe 222 are removed from the structure in the embodiments corresponding to FIG. 2 to FIG. 7. For other descriptions of a structure and an effect, refer to the embodiments corresponding to FIG. 2 to FIG. 7.

The CTC chassis is merely used as an example for description in the foregoing. For a fuel vehicle and an electric vehicle using a non-CTC technology, functional pipes may alternatively be routed in a middle section of the first longitudinal beam and a middle section of the second longitudinal beam. For a specific routing manner, refer to that of the foregoing CTC chassis.

Based on a same inventive concept, an embodiment of this application further provides a vehicle. FIG. 20 shows a vehicle according to an embodiment of this application. As shown in FIG. 20, the vehicle provided in this embodiment of this application includes a chassis 01 and an upper vehicle body 02. The upper vehicle body 02 is located above the chassis 01, and is fastened to a first longitudinal beam 1 and a second longitudinal beam 2, or may be connected to an interface at another position on a main vehicle frame, to form an entire vehicle. For beneficial effects of the vehicle, refer to those of the chassis 01 provided in the foregoing embodiments.

The chassis 01 is applied to the entire vehicle, and is used as a carrier of the upper vehicle body 02. Compared with a conventional chassis, the chassis 01 has complete functions, for example, basic functions such as independent traveling, operation, and acceleration and deceleration, and has some safety attributes and intelligence attributes. The chassis 01 includes the main vehicle frame, to carry related components for implementing the functions. The upper vehicle body 02 and the chassis 01 are separately made. After the upper vehicle body 02 and the chassis 01 are separately formed, the upper vehicle body 02 is assembled above the chassis 01, and is fastened to the main vehicle frame. Wheels 03 are mounted in rows in a vehicle width direction of the chassis 01.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A chassis, comprising a main vehicle frame and a plurality of functional pipes, wherein
the main vehicle frame comprises a first longitudinal beam and a second longitudinal beam that are spaced in a width direction; and
at least a part of the functional pipes run through a middle section of the first longitudinal beam.

2. The chassis according to claim 1, wherein the chassis is a CTC chassis, and the chassis further comprises a cell assembly; and
the middle section of the first longitudinal beam forms a first battery outer side beam, a middle section of the second longitudinal beam forms a second battery outer side beam, and the cell assembly is disposed between the middle section of the first longitudinal beam and the middle section of the second longitudinal beam.

3. The chassis according to claim 1 or 2, wherein the part of the functional pipes run through the middle section of the first longitudinal beam, and another part of the functional pipes run through the middle section of the second longitudinal beam.

4. The chassis according to claim 3, wherein a sum of cross-sectional areas of the functional pipes that run through the middle section of the first longitudinal beam is 0.85 to 1.15 times a sum of cross-sectional areas of the functional pipes that run through the middle section of the second longitudinal beam.

5. The chassis according to claim 3 or 4, wherein the middle section of the first longitudinal beam is provided with a plurality of cavities, one of the cavities is a first cavity, and all the functional pipes in the middle section of the first longitudinal beam run through the first cavity; and
the middle section of the second longitudinal beam is provided with a plurality of cavities, one of the cavities is a second cavity, and all the functional pipes in the middle section of the second longitudinal beam run through the second cavity.

6. The chassis according to claim 5, wherein the middle section of the first longitudinal beam is provided with a plurality of layers of cavities distributed in a vertical direction, and the first cavity is located at a middle layer of the cavities; and
the middle section of the second longitudinal beam is provided with a plurality of layers of cavities distributed in the vertical direction, and the second cavity is located at a middle layer of the cavities.

7. The chassis according to claim 6, wherein the layer at which the first cavity is located is provided with at least two cavities distributed in the width direction, and the first cavity is a cavity away from the middle section of the second longitudinal beam; and
the layer at which the second cavity is located is provided with at least two cavities distributed in the width direction, and the second cavity is a cavity away from the middle section of the first longitudinal beam.

8. The chassis according to claim 5, wherein a plurality of first supports are sequentially spaced and fastened in the first cavity, and each of the functional pipes located in the middle section of the second longitudinal beam is spaced from an inner wall of the first cavity through the first supports in sequence; and
a plurality of second supports are sequentially spaced and fastened in the second cavity, and each of the functional pipes located in the middle section of the second longitudinal beam is spaced from an inner wall of the second cavity through the second supports in sequence.

9. The chassis according to claim 8, wherein the first support comprises a first limiting block, each of the functional pipes located in the middle section of the first longitudinal beam runs through a plurality of first limiting blocks in sequence, and each of the first limiting blocks is fastened to the inner wall of the first cavity; and
the second support comprises a second limiting block, each of the functional pipes located in the middle section of the second longitudinal beam runs through a plurality of second limiting blocks in sequence, and each of the second limiting blocks is fastened to the inner wall of the second cavity.

10. The chassis according to claim 9, wherein the first limiting block is made of an elastic material, and the first limiting block is in an interference fit with the inner wall of the first cavity; and
the second limiting block is made of an elastic material, and the second limiting block is in an interference fit with the inner wall of the second cavity.

11. The chassis according to claim 9, wherein the first limiting block is made of rubber; and
the second limiting block is made of rubber.

12. The chassis according to claim 8, wherein a distance between every two adjacent first supports is between 600 mm and 900 mm; and
a distance between every two adjacent second supports is between 600 mm and 900 mm.

13. The chassis according to claim 8, wherein a distance between every two adjacent functional pipes located in the middle section of the first longitudinal beam is between 6 mm and 30 mm; and
a distance between every two adjacent functional pipes located in the middle section of the second longitudinal beam is between 6 mm and 30 mm.

14. The chassis according to claim 1, wherein the functional pipes that run through the middle section of the first longitudinal beam comprise a brake pipe; and
the functional pipes that run through the middle section of the second longitudinal beam comprise a brake pipe.

15. A vehicle, comprising an upper vehicle body and the chassis according to any one of claims 1 to 14, wherein
the upper vehicle body is fastened to the first longitudinal beam and the second longitudinal beam.
